# EUROPEAN PATENT APPLICATION

(11) **EP 3 210 476 A1**
(43) Date of publication of application: **30.08.2017**
(21) Application number: 15851780.5
(22) Date of filing: 30.09.2015
(51) Int. Cl.: A23L 2/52, A23C 9/13, A23F 3/16, A23F 5/24, A23L 2/00, A23L 2/02, C12G 3/04

(54) **CONTAINERIZED BEVERAGE FOR PERSON HAVING DIFFICULTY SWALLOWING**

(30) Priority: 20.10.2014 JP 2014214073
(71) Applicant: Daiwa Can Company, Tokyo 100-7009 (JP)
(72) Inventor: BATORI, Hiroshi, Sagamihara-shi Kanagawa 252-5183 (JP); AKACHI, Toshiyuki, Sagamihara-shi Kanagawa 252-5183 (JP); KANAZAWA, Tomoko, Sagamihara-shi Kanagawa 252-5183 (JP); KUROIWA, Keiji, Sagamihara-shi Kanagawa 252-5183 (JP); TAMAI, Tomoe, Sagamihara-shi Kanagawa 252-5183 (JP); UMETSU, Takasuke, Ibaraki-shi Osaka 567-0004 (JP); ENDOU, Hiroshi, Sagamihara-shi Kanagawa 252-5183 (JP); SUGANUMA, Yoshinari, Sagamihara-shi Kanagawa 252-5183 (JP); YAMAMOTO, Kazuo, Sagamihara-shi Kanagawa 252-5183 (JP); KAWAMORI, Moeko, Sagamihara-shi Kanagawa 252-5183 (JP); NAKAMOTO, Hikaru, Sagamihara-shi Kanagawa 252-5183 (JP)
(74) Representative: Agasse, Stéphane
(86) International application number: PCT/JP2015/077827
(87) International publication number: WO 2016/063698

(57) **Abstract**

According to the present invention, there is provided a container-filled beverage for a person with swallowing difficulty, which contains a thickening agent, has a viscosity of 50 mPa·s or more, and is filled in a light-shielding container.

## Description

### FIELD

The present invention relates to a container-filled beverage which is developed so that a subject with swallowing dysfunction can easily drink it.

### BACKGROUND

The Japanese Society of Dysphagia Rehabilitation advocates that a food produced for swallowing difficulty persons having swallowing dysfunction should be referred to as a "modified diet for dysphagic persons." The modified diet for dysphagic persons is divided into a jelly-state food and a thickened food. The jelly-state food is a gel-state food such as jelly or pudding, and its property is evaluated by a cohesiveness or hardness. The gel-state food has a problem such as ununiformity or separation of water. On the other hand, the thickened food is a sol-state food, and its property is evaluated by a viscosity.

For a thickened beverage among beverages for a person with swallowing difficulty, it is necessary to add a thickening agent to the beverage to add a desired thickness to the beverage, when it is taken. For that purpose, the thickened beverage has a problem that it takes time to serve the beverage to a person with swallowing difficulty in a clinical site.

In addition, it often takes several tens of seconds to several minutes from the addition of a thickening agent until the beverage is thickened. Therefore, it is necessary to judge whether or not an appropriate thickness is obtained, by adding a given amount of the thickening agent to the beverage while the mixture is stirred thoroughly so as to sufficiently dissolve therein, and evaluating the degree of thickness after the lapse of a given time, not by evaluating the degree of thickness while the mixture is stirred. For that reason, the thickened beverage has a problem that it takes time until the beverage can be actually taken. Further, the degree of viscosity may vary depending on the kind of the thickening agent, or the temperature or the kind of liquid. For that reason, the thickened beverage has a problem that the quality of the beverage served is uneven.

For example, Jpn. Pat. Appln. KOKAI Publication No. 2011-217759 discloses a transparent water drink having an appropriate thickness and causing no water separation even at a low temperature. The water drink disclosed in Jpn. Pat. Appln. KOKAI Publication No. 2011-217759 can be classified into the gel-state food, as described that it usually contains agar and xanthan gum, and does not cause water separation.

### SUMMARY

### TECHNICAL PROBLEM

The present inventors have made intensive studies in order to provide a container-filled beverage for a person with swallowing difficulty. As a result, they have found that the persons with swallowing difficulty prefer the sol-state thickened beverage, not gel-state. In addition, they have found that the sol-state beverage for a person with swallowing difficulty, which is obtained by adding a thickness with a thickening agent, causes reduction of the viscosity and generation of odd smell, when exposed to light. The present invention, accordingly, aims at providing a container-filled beverage for a person with swallowing difficulty wherein the beverage is prevented from the reduction of the viscosity and the generation of the odd smell that are caused by light.

### SOLUTION TO PROBLEM

According to the present invention, there is provided a container-filled beverage for a person with swallowing difficulty, characterized by containing a thickening agent, having a viscosity of 50 mPa·s or more, and being filled in a light-shielding container.

### ADVANTAGEOUS EFFECTS

According to the present invention, it is possible to provide a container-filled beverage for a person with swallowing difficulty wherein the beverage is prevented from the reduction of the viscosity and the generation of the odd smell that are caused by light.

### BRIEF DESCRIPTION OF THE DRAWINGS

FIG. 1 is a schematic view showing a light irradiation test.
FIG. 2 is a graph showing a relationship between light irradiation time and integrated values of visible light illuminance.
FIG. 3 is a graph showing a relationship between light irradiation time and integrated values of ultraviolet illuminance.
FIG. 4 is a graph showing a relationship between irradiation time and viscosities in Test 1.
FIG. 5 is a partially enlarged view of the graph of FIG. 4.
FIG. 6 is a graph showing a relationship between irradiation time and viscosities in Test 2.

### DETAILED DESCRIPTION

The container-filled beverage for a person with swallowing difficulty according to the present invention is characterized in that the beverage contains a thickening agent, has a viscosity of 50 mPa·s or more and is filled in a light-shielding container.

It is preferable to primarily use xanthan gum as the thickening agent. Only xanthan gum may be used as the thickening agent, or xanthan gum may be used in combination with another thickening agent. Examples of the other thickening agent include a thickening polysaccharide such as guar gum, carrageenan, gellan gum, psyllium seed gum, pectin, starch, and dextrin. On the other hand, the container-filled beverage for a person with swallowing difficulty according to the present invention does not contain a thickening polysaccharide which causes gelation, such as gelatin and agar. If such a component is contained in the beverage, it becomes undesirably a gel-state. In addition, there is a risk that the beverage may be easily affected by a temperature. However, the thickening polysaccharide which causes gelation may be contained in the container-filled beverage for a person with swallowing difficulty according to the present invention, as long as it is used in a concentration or condition which does not cause gelation of the beverage.

The total concentration of the thickening agent in the container-filled beverage for a person with swallowing difficulty varies depending on the kinds of the thickening agent and the beverage, and it is preferably within a range of 0.1 to 5.0% by mass, more preferably 0.5 to 3.0% by mass. For example, when xanthan gum is used alone as the thickening agent, the concentration thereof is preferably within a range of 0.1 to 5.0% by mass, more preferably 0.3 to 4.0% by mass, even more preferably 0.5 to 2.0% by mass.

The container-filled beverage for a person with swallowing difficulty according to the present invention, which is obtained by adding a thickness with the thickening agent described above, is a sol-state beverage. In the present invention, the beverage refers to a food which has a fluidity and can be swallowed without chewing. The sol-state food including the sol-state beverage is, for example, a food which has a viscosity but is not solidified, as is the case with honey. The sol-state food does not cause water separation, unlike the gel-state food. There is no risk, accordingly, that the water separation occurs during a long-term storage, and thereby the food becomes uneven. On the other hand, the gel-state food such as jelly is a solidified product and does not have a fluidity. In addition, the gel-state food has a characteristic that water separation occurs, when it is stored for a long term.

The container-filled beverage for a person with swallowing difficulty according to the present invention has a viscosity of 50 mPa·s or more. Therefore, even a person with swallowing difficulty can safely take the beverage. In addition, a subject who is diagnosed with swallowing dysfunction can take the beverage with rare misswallowing and more safely take it compared to a usual beverage which is not viscous. On the other hand, the beverage has preferably a viscosity of 500 mPa·s or less. When the viscosity is 500 mPa·s or less, the beverage can be flowed out smoothly from the container. When the viscosity of the beverage is 150 mPa·s or less, a beverage suitable for subjects with milder swallowing dysfunction can be provided. Thus, in one embodiment, the beverage has preferably a viscosity of 50 mPa·s or more and 150 mPa·s or less. In the present specification, the viscosity refers to a viscosity measured at a liquid temperature of 20°C.

A thickened beverage which is generally provided has a viscosity of about 15 to 25 mPa·s. For example, a CALPIS stock solution has a viscosity of about 20 mPa·s, and Kahlua and Milk has a viscosity of about 15 mPa·s. A beverage having a viscosity of about 25 mPa·s may be exemplified by Amazake (a sweet, low- or non-alcoholic Japanese drink made from fermented rice), and the like. A beverage having a viscosity of about 100 mPa·s may include canned coconut milk, and the like. The canned coconut milk is not drunk as it is but is appropriately diluted and drunk. As understood from this, the beverage for a person with swallowing difficulty according to the present invention has a remarkably higher viscosity than those thickened beverages generally provided.

The container-filled beverage for a person with swallowing difficulty according to the present invention is preferably a beverage selected from water, a tea beverage, sports drink, fruit juice beverage, coffee beverage, lactic acid bacteria beverage, carbonated beverage, alcoholic beverage, and the like. When the thickening agent is added to the beverage described above to prepare the container-filled beverage for a person with swallowing difficulty according to the present invention, persons with swallowing difficulty can drink commonly and widely the beverage, and it can be generally used in clinical sites such as a hospital.

The beverage for a person with swallowing difficulty according to the present invention is filled in a light-shielding container. The light-shielding container is preferably an airtight container. As the light-shielding, airtight container, it is possible to use an airtight container made of a metal such as aluminum or steel, or an airtight container made of a composite material of a metal and a resin. As a shape of the container, for example, a can or a pouch container such as a cheer pack can be used. Walls of the container are designed so that the wall has a thickness sufficient for providing the light-shielding property.

The present inventors have found that when a sol-state beverage for a person with swallowing difficulty containing the thickening agent is exposed to light, the viscosity of the beverage is changed. The change in the viscosity appears, in particular, as reduction of the viscosity. When the beverage is filled in a container not having a light-shielding property, the viscosity of the beverage is reduced, and thereby a product having the same quality cannot be provided. In this case, when a beverage having a desired viscosity adapted to the degree of swallowing disorder is drunk, the beverage having a viscosity lower than expected is actually drunk, resulting in occurrence of misswallowing.

However, when the beverage for a person with swallowing difficulty containing the thickening agent and having a viscosity of 50 mPa·s or more is filled in the light-shielding container according to the present invention, the irradiation of light to the beverage is prevented, and thereby the reduction of the viscosity and the generation of the odd smell can be prevented. Consequently, the viscosity of the beverage can be maintained in a constant state, which enables the provision of a product which can be drunk without anxiety by the person with swallowing difficulty.

The container-filled beverage for a person with swallowing difficulty according to the present invention has, at least, a viscosity of 50 mPa·s or more and 500 mPa·s or less when it is drunk. In addition, the beverage preferably has a viscosity of 80% or more at the time of drinking, if the viscosity of the beverage at the time of the preparation is assumed as 100%. When the viscosity of the beverage at the time of drinking is higher than the viscosity at the time of the preparation thereof, the viscosity at the time of drinking is preferably 110% or less.

The beverage having the viscosity range described above can be prepared by adding the thickening agent to a raw material liquid in a concentration of 0.1 to 5.0% by mass, and filling the resulting mixture in the light-shielding container, as described above.

The light-shielding airtight container has preferably a light-shielding property of 90% or more, more preferably 99% or more. Even more preferably, the container is completely lightproof. The percentage of the light-shielding property refers to a ratio of an illuminance (lux) of light which has not been passed through a container, to an illuminance of light irradiated to the container. When the light-shielding airtight container is not completely lightproof, the container is preferably a ultraviolet-shielding container. Specifically, a container which blocks ultraviolet having a wavelength up to about 320 nm, is preferable, and a container which blocks ultraviolet having a wavelength of up to about 400 nm, is more preferable.

As the light-shielding airtight container, it is possible to use, for example, a bottle to which a UV-cut seal is stuck, a paper drink box, a metallic can, or the like. Because of the high light-shielding property, it is preferable to use the paper drink box or metallic can, and it is more preferable to use the metallic can. The metallic can has the high light-shielding property, keeps the airtightness satisfactorily, and inhibits the permeation of oxygen, and thus the viscosity of the beverage can be more stably kept, and the generation of the odd smell can be effectively prevented.

### [Example]

### [Test 1]

A container-filled beverage for a person with swallowing difficulty was produced, and change in the viscosity was measured by irradiating light thereto.

First, Echo Gum RD (xanthan gum, manufactured by DSP Gokyo Food & Chemical Co., Ltd.) was added to water in a concentration of 1.3% by mass, and the mixture was stirred while heating to obtain a solution of Echo Gum RD. A viscosity of the obtained solution was measured. The measurement results obtained by using an E-type viscometer was 212.7 mPa·s in measurement conditions of a temperature of 20°C, a shear rate of 50/second, and a measurement time of 120 seconds.

A transparent polypropylene pouch container was filled with 120 g of the obtained solution, and then sealed up. Next, pressurizing and heating sterilization was performed in a retort oven at 125°C for 15 minutes, thereby producing a plurality of pouch samples.

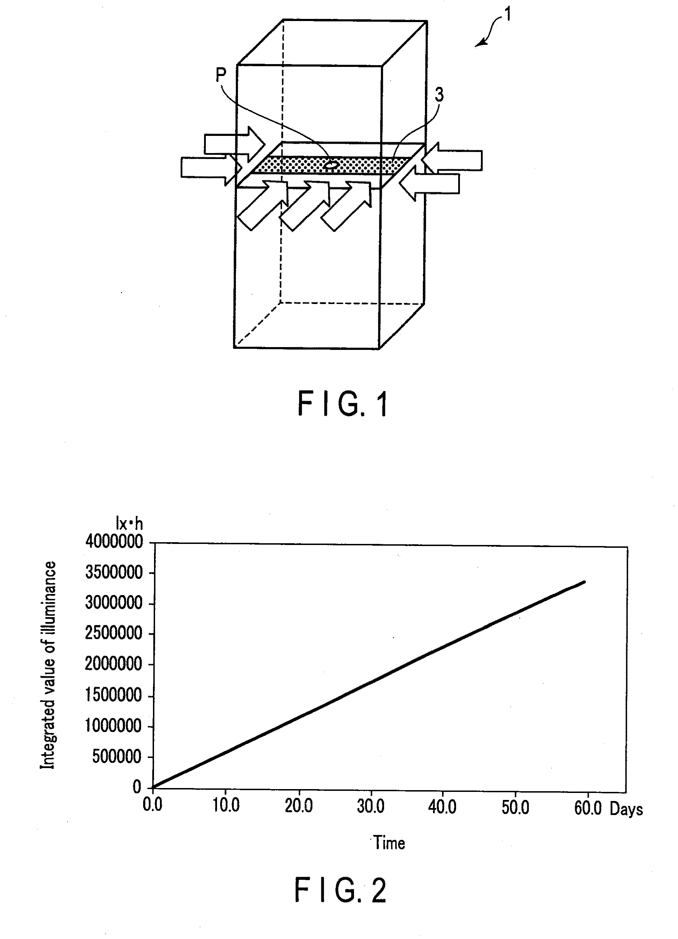

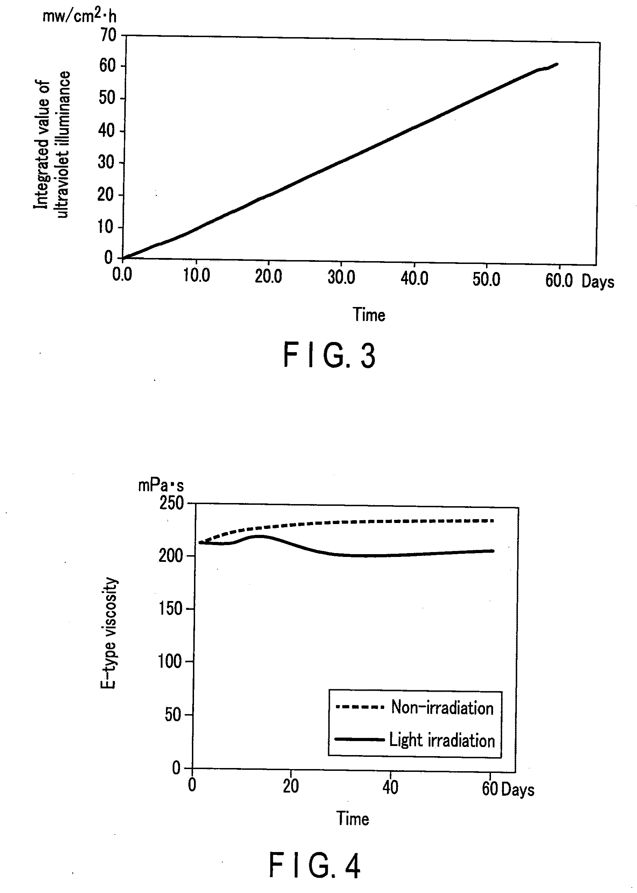

Half of the pouch samples which had been heat-sterilized under pressure, were subjected to light irradiation. The light irradiation was performed using a light irradiation chamber 1 as shown in FIG. 1. The pouch samples were put on a stage 3 of the light irradiation chamber 1, and light is irradiated thereto from an arrow direction. The temperature was adjusted to 20°C. An irradiation condition was adjusted to 2500 luxes. Illuminance measurement was continuously performed at a point P on the stage 3. At the start of the measurement, a measured value of visible light was 2552 to 3201 luxes and that of ultraviolet light was 0.030 to 0.037 µW/cm². The light irradiation was continuously performed for 60 days in the conditions described above. Table 1 shows integrated values of the visible light illuminance and the ultraviolet illuminance. FIG. 2 shows a relationship between the light irradiation time and the integrated values of the visible light illuminance. FIG. 3 shows a relationship between the light irradiation time and the integrated values of the ultraviolet illuminance.

As control samples for comparison, the remaining half of the pouch samples were stored in the same light irradiation chamber without light irradiation.

**[Table 1]**

| <Integrated values of illuminance> | | |
|---|---|---|
| | Integrated values of visible light illuminance (klux▪h) | Integrated values of ultraviolet illuminance (µW/cm²▪h) |
| After 7 days | 407.4 | 6.464 |
| After 14 days | 803.0 | 14.180 |
| After 30 days | 1907.0 | 34.830 |
| After 60 days | 3418.0 | 63.200 |

After the 7-day, 14-day, 30-day, and 60-day continuous irradiation, a viscosity of the solution in the pouch sample was measured by an E-type viscometer. The measured values of 3 times measurement and the average value thereof are shown in Table 2. After 60 days, pH was 5.780 and Brix was 1.3%. The temperature of the solution upon the measurement was 20.0°C. After 60 days, the solution had a strong thickening agent smell.

**[Table 2]**

| <Viscosity (mPa·s) of light-irradiated samples measured by E-type viscometer> | | | | | |
|---|---|---|---|---|---|
| | Before starting | After 7 days | After 14 days | After 30 days | After 60 days |
| N1 | 218.4 | 211.6 | 225.7 | 206.9 | 208.9 |
| N2 | 209.6 | 209.2 | 217.3 | 198.9 | 208.5 |
| N3 | 210.0 | 216.1 | 214.8 | 201.5 | 208.2 |
| Ave. | 212.7 | 212.3 | 219.3 | 202.4 | 208.5 |

On the other hand, a viscosity of the solution in the non-irradiated pouch sample was measured by the E-type viscometer. The measured values of 3 times measurement and the average value thereof are shown in Table 3. After 60 days, pH was 4.526 and Brix was 1.3%. The temperature of the solution upon the measurement was 20.0°C. After 60 days, the solution had a light thickening agent smell.

**[Table 3]**

| <Viscosity (mPa·s) of non-irradiated samples measured by E-type viscometer> | | | | | |
|---|---|---|---|---|---|
| | Before starting | After 7 days | After 14 days | After 30 days | After 60 days |
| N1 | 218.4 | 224.8 | 225.5 | 235.7 | 235.2 |
| N2 | 209.6 | 217.6 | 228.2 | 234.9 | 237.6 |
| N3 | 210.0 | 225.0 | 230.1 | 231.5 | 239.2 |
| Ave. | 212.7 | 222.5 | 227.9 | 234.0 | 237.3 |

The color of the solutions in the light-irradiated pouch sample and the non-irradiated pouch sample was observed. The results are shown in Table 4. In Table 4, L represents lightness, and the higher the numerical value, the higher the lightness; and a and b represent chromaticity, and it means that the color changes from yellow to blue with the decrease of the value of b. The light-irradiated solution turned into almost transparent and lost the color after 60 days. On the other hand, the non-irradiated solution maintained the original color.

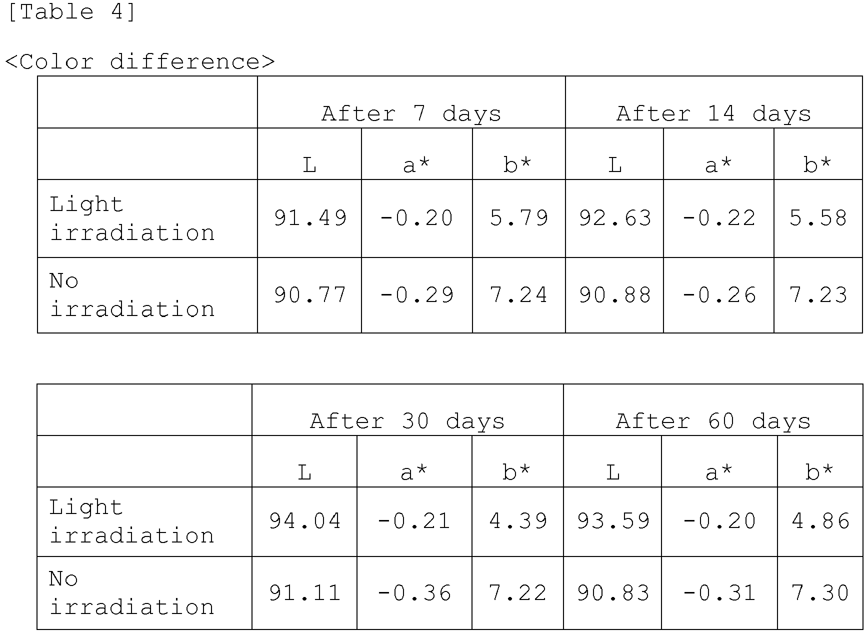

The viscosity of the solution in the light-irradiated sample and the non-irradiated sample after one day, 7 days, 14 days, 30 days, and 60 days, are shown in Table 5.

**[Table 5]**

| <Viscosity (mPa·s) measured by E-type viscometer> | | | | | |
|---|---|---|---|---|---|
| | After 1 day | After 7 days | After 14 days | After 30 days | After 60 days |
| Light irradiation | 212.7 | 212.3 | 219.3 | 202.4 | 208.5 |
| No irradiation | 212.7 | 222.5 | 227.9 | 234.0 | 237.3 |

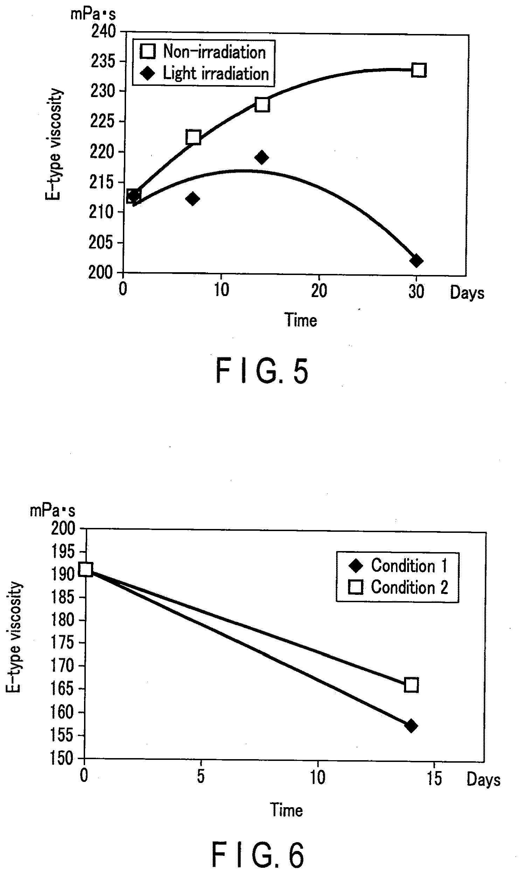

FIG. 4 shows a graph based on the values shown in Table 5. FIG. 5 is a partially enlarged view of FIG. 4. FIG. 4 and FIG. 5 demonstrate that the viscosity of the solution which had been exposed to light was reduced. In general, the illuminance reaches 2000 luxes or higher at the lightest place of a shop, and if the light source is an ordinary white lamp, the ultraviolet illuminance is 7 µW/cm² or more. In addition, when a product is displayed near a window of the shop, it is exposed to stronger ultraviolet light. It was demonstrated that when a beverage is filled in a light-permeable container, the viscosity of the beverage could be reduced with time, and thus the beverage might not have the original viscosity set at the time of the preparation.

### [Test 2]

A container-filled beverage for a person with swallowing difficulty was produced, light with different ultraviolet illuminance was irradiated thereto, and change in the viscosity of the beverage was measured.

First, Echo Gum RD (xanthan gum, manufactured by DSP Gokyo Food & Chemical Co., Ltd.) was added to water in a concentration of 1.3% by mass, and the mixture was stirred while heating to obtain a solution of the xanthan gum. A viscosity of the obtained solution was measured. The measurement results obtained by using an E-type viscometer was 191.1 mPa·s in measurement conditions of a temperature of 20°C, a shear rate of 50/second, and a measurement time of 120 seconds.

A transparent polypropylene pouch container was filled with 120 g of the obtained solution, and then sealed up. Next, pressurizing and heating sterilization was performed in a retort oven at 125°C for 15 minutes, thereby producing a plurality of pouch samples.

Half the pouch samples which had been heat-sterilized under pressure and the remaining half samples, were subjected to light irradiation under different conditions from each other. The light irradiation was performed using a light irradiation chamber 1 as shown in FIG. 1. The pouch samples were put on a stage 3 of a light irradiation chamber 1, and light is irradiated thereto from an arrow direction. The temperature was adjusted to 20°C. The irradiation conditions were as follows:
Condition 1: Visible light was 1500 luxes and ultraviolet light was 40 µW/cm².
Condition 2: Visible light was 1700 luxes and ultraviolet light was 10 µW/cm².
The light irradiation was continuously performed for 14 days in each condition. After 14-day continuous irradiation, a viscosity of the solution in the pouch sample was measured by an E-type viscometer. The temperature of the solution upon the measurement was 20.0°C. The average value obtained from 3 times measurement is shown in Table 6.

**[Table 6]**

| <Viscosity (mPa·s) measured by E-type viscometer> | | | |
|---|---|---|---|
| Ultraviolet illuminance (µW/cm²) | | Before starting | After 14 days |
| Condition 1 | 40 | 191.1 | 157.8 |
| Condition 2 | 10 | 191.1 | 166.4 |

FIG. 6 shows a graph based on the values shown in Table 6. According to FIG. 6, it was demonstrated that when ultraviolet light was irradiated, the viscosity was reduced, and the higher the illuminance of the ultraviolet light, the higher the reduction of the viscosity.

In addition, the odd smell of the solution was confirmed after 14 days. As a result, the samples subjected to condition 1 had a strong thickening agent smell. The sample subjected to the condition 2 had a light thickening agent smell.

According to the present invention, the beverage for a person with swallowing difficulty is filled in the light-shielding container, and thus it is possible to suppress the reduction of the viscosity of the beverage. Consequently, it is possible to provide a beverage which has a pre-determined viscosity and can be safely taken by a person with swallowing difficulty.

## Claims

1. A container-filled beverage for a person with swallowing difficulty, **characterized by** containing a thickening agent, having a viscosity of 50 mPa·s or more when measured by an E-type viscometer, and being filled in a light-shielding container.

2. The container-filled beverage for a person with swallowing difficulty according to claim 1, **characterized in that** the viscosity is within a range of 50 to 500 mPa·s.

3. The container-filled beverage for a person with swallowing difficulty according to claim 1 or 2, **characterized in that** the light-shielding container is an airtight container.

4. The container-filled beverage for a person with swallowing difficulty according to any one of claims 1 to 3, **characterized in that** the light-shielding container is a metallic can.

5. The container-filled beverage for a person with swallowing difficulty according to any one of claims 1 to 4, **characterized in that** the thickening agent contains xanthan gum.

6. The container-filled beverage for a person with swallowing difficulty according to any one of claims 1 to 5, **characterized in that** the beverage for a person with swallowing difficulty is a beverage selected from water, a tea beverage, sports drink, fruit juice beverage, coffee beverage, lactic acid bacteria beverage, carbonated beverage, and alcoholic beverage.

## Amended claims

### Amended claims under Art. 19.1 PCT

**1.** A container-filled beverage for a person with swallowing difficulty, **characterized in that** a beverage primarily containing xanthan gum as a thickening agent and having a viscosity of 50 mPa·s or more when measured by an E-type viscometer is filled in an ultraviolet-shielding container.

**2.** The container-filled beverage for a person with swallowing difficulty according to claim 1, **characterized in that** the viscosity is within a range of 50 to 500 mPa·s.

**3.** The container-filled beverage for a person with swallowing difficulty according to claim 1 or 2, **characterized in that** the ultraviolet-shielding container is an airtight container.

**4.** The container-filled beverage for a person with swallowing difficulty according to any one of claims 1 to 3, **characterized in that** the ultraviolet-shielding container is a metallic can.

**5.** The container-filled beverage for a person with swallowing difficulty according to any one of claims 1 to 4, **characterized in that** the beverage contains only xanthan gum as the thickening agent.

**6.** The container-filled beverage for a person with swallowing difficulty according to any one of claims 1 to 5, **characterized in that** the beverage does not contain a thickening polysaccharide which causes gelation, as the thickening agent.
